# FASCICULE DE BREVET EUROPEEN

(11) **EP 3 499 858 B1**
(45) Date de publication et mention de la délivrance du brevet: **08.09.2021**
(21) Numéro de dépôt: 18212738.1
(22) Date de dépôt: 14.12.2018
(51) Int. Cl.: H04M 3/42, H04L 12/58, H04M 7/00

(54) **PROCÉDÉ ET SYSTÈME DE DÉTECTION DE NUMÉROS D'APPEL UTILISÉS PAR DES SIMBOX POUR SOLLICITER DES COMMUNICATIONS TÉLÉPHONIQUES**
VERFAHREN UND SYSTEM ZUR ERFASSUNG DER VON SIM-BOXEN VERWENDETEN RUFNUMMERN ZUR ANFORDERUNG VON TELEFONGESPRÄCHEN
METHOD AND SYSTEM FOR DETECTING CALL NUMBERS USED BY SIMBOXES FOR REQUESTING TELEPHONE COMMUNICATIONS

(30) Priorité: 15.12.2017 FR 1762245
(43) Date de publication de la demande: 19.06.2019
(73) Titulaire: Araxxe, 69006 Lyon (FR)
(72) Inventeur: LESAGE, Xavier, 92200 Neuilly Sur Seine (FR); SCHOLER, Christophe, 69100 Villeurbanne (FR); ORSINI, Philippe, 83000 Toulon (FR); MARCHAL, Alexandre, 69520 Grigny (FR); PERRON, Lilian, 69003 Lyon (FR)
(74) Mandataire: Weber, Jean-François

(56) Documents cités:
- WO-A1-2009/147163
- WO-A1-2010/055249
- CN-A- 101 257 716

## Description

### Domaine de l'invention

La présente invention concerne un procédé de détection de numéro(s) d'appel, dits numéros d'appel solliciteur, utilisé(s) par exemple par des SIMBOX, pour solliciter des communications téléphoniques vers des numéros d'appel, dits numéros cibles, et en particulier des communications qui sont soit surtaxées soit soumises à une tarification spécifique. Elle concerne également un système mettant en œuvre un tel procédé.

Le domaine de l'invention est le domaine de la détection de SIMBOX, ou de cartes SIM associées à des numéros d'appels, utilisés pour solliciter des communications téléphoniques vers d'autres numéros.

### Etat de la technique

Les réseaux de téléphonie mobile subissent des contournements à l'interconnexion. Ces contournements ont lieu lors de communications faisant intervenir plusieurs réseaux de téléphonie mobile. Des cartes SIM sont utilisées, de manière frauduleuse, au sein d'un premier réseau de téléphonie pour terminer un appel provenant depuis un deuxième réseau de téléphonie. Des solutions ont été développées pour détecter les cartes SIM utilisées pour réaliser ces contournements, notamment par comparaison d'identifiants d'appelant.

Il existe aussi une autre utilisation frauduleuse de cartes SIM, au sein même d'un réseau de téléphonie. Ces fraudes consistent à envoyer un message non-sollicité (par exemple de type SMS ou MMS) à partir d'un numéro d'appel, dit « numéro solliciteur » dans la suite de la demande, et demandant à appeler un numéro d'appel, dit « numéro cible » dans la suite de la demande, sous prétexte d'écouter un message vocal ou de recevoir un gain exceptionnel. Le numéro cible utilisé est généralement soumis à une tarification spécifique de sorte que chaque communication téléphonique vers ce numéro cible apporte un gain financier aux fraudeurs.

Le document WO-2009/147163 A1 décrit un procédé de traçabilité et de résurgence de flux pseudonymisés dans des réseaux de communication, notamment de télécommunication et de télédiffusion, susceptible de faciliter la détection de flux non autorisés, notamment pour lutter contre l'envoi de messages non sollicités ou la sollicitation massive d'abonnés pour inciter au rappel de numéros en réalité facturés.

Actuellement, lorsqu'un message non-sollicité est adressé par un numéro solliciteur, la carte SIM qui lui est associée est déconnectée. Or, cette solution permet de détecter les cartes SIM utilisées frauduleusement une par une. Par conséquent, la détection et la déconnexion massive de cartes SIM frauduleuses est limitée. De même, l'identification d'un groupe de cartes SIM, utilisées de manière frauduleuse reste chronophage avec cette technique.

L'invention a pour but de pallier l'inconvénient précité.

Un autre but de l'invention est de proposer un procédé et un système de détection plus rapide, plus efficace et plus performant de numéro(s) solliciteurs, et donc de carte(s) SIM qui leurs sont associées, pour solliciter des communications téléphoniques vers des numéros cibles soumis à une tarification spécifique.

### Exposé de l'Invention

L'invention permet d'atteindre au moins l'un des buts précités par un procédé de détection d'au moins un numéro de téléphone, dit numéro solliciteur, utilisé pour solliciter une communication téléphonique vers au moins un numéro de téléphone, dit numéro cible, ledit procédé (100) comprenant une phase, dite de détection, comprenant les étapes suivantes :
- émission, par au moins un robot utilisant au moins un numéro de téléphone, dit numéro test, d'une communication téléphonique vers au moins un numéro cible préalablement détecté ;
- réception (108) d'au moins un message audit numéro test ; et
- pour au moins un message reçu :
   ▪ détection d'un numéro de téléphone contenu dans ledit message téléphonique, et mémorisation dudit numéro comme numéro cible lorsque ledit numéro est un nouveau numéro ; et
   ▪ mémorisation du numéro de téléphone émetteur dudit message comme numéro solliciteur, lorsque ledit numéro est un nouveau numéro ;
   ledit procédé comprenant au moins une nouvelle itération de ladite phase de détection utilisant au moins un nouveau numéro cible détecté lors de ladite étape de détection.

Ainsi, le procédé selon l'invention présente une approche proactive pour la détection de numéros solliciteurs utilisés, frauduleusement, par exemple par des SIMBOX, pour solliciter des communications frauduleuses vers des numéros cibles. Plus précisément, le procédé selon l'invention prévoit de réaliser des communications vers des numéros cibles, en vue de détecter de nouveaux numéros solliciteurs à partir de messages reçus suite à ces communications, et de réaliser à nouveau des communications vers les nouveaux numéros cibles, et ainsi de suite.

Par conséquent, le procédé selon l'invention permet de stimuler des communications par les cartes SIM utilisées frauduleusement, par exemple par des SIMBOX, ce qui permet de les détecter de manière plus rapide, plus performante et plus efficace. De plus, contrairement aux techniques actuelles qui détectent un numéro solliciteur de manière individuelle, le procédé selon l'invention permet de détecter un ensemble de numéros solliciteurs, tel qu'un serveur de cartes SIM, également appelé SIMBOX, qui serait opéré par un fraudeur.

Avantageusement, le procédé selon l'invention peut en outre comprendre une étape préliminaire de constitution d'une liste, dite cible, comprenant au moins un numéro cible.

Cette étape préliminaire peut être réalisée avant la première itération de la phase de détection.

Suivant des exemples de réalisation, l'étape préliminaire de constitution d'une liste cible peut comprendre une lecture d'au moins un numéro d'appel dans une liste de numéros surtaxés.

Une telle liste peut être une liste publique de numéros dits de Services à Valeur Ajoutée surtaxés, « Premium Rate Services » en anglais.

Une telle liste peut être une liste de numéros surtaxés ayant fait, dans le passé, l'objet de plaintes ou de signalisation de la part d'utilisateurs ayant été victimes d'une surfacturation.

Une telle liste peut également être constituée par la réalisation d'une campagne d'appels test émis vers des numéros cibles potentiels et par analyse des données de facturation pour ces appels test. Les numéros cibles potentiels peuvent être sélectionnés de manière aléatoire, ou sélectionnés parmi des numéros préalablement signalés comme potentiellement frauduleux.

Avantageusement, pour au moins un numéro cible, l'étape d'émission d'au moins une communication téléphonique peut comprendre une émission d'un appel vocal vers ledit numéro cible.

Dans ce cas, le robot d'appel émet un appel vers le numéro cible.

Le robot peut être configuré pour attendre que l'appel décroche. Dans ce cas, de manière optionnelle, il est possible de passer un signal sonore pour que l'appel test ressemble le plus possible à un appel émis de la part d'un utilisateur réel. Le signal sonore peut être un signal sonore préalablement mémorisé, ou sélectionné parmi plusieurs signaux sonores préalablement mémorisés.

Alternativement, le robot peut être configuré pour raccrocher au bout d'un nombre prédéterminé de sonneries, sans attendre que l'appel soit décroché.

Alternativement, ou en plus, pour au moins un numéro cible, l'étape d'émission d'au moins une communication téléphonique peut comprendre une émission d'un message de type SMS, SMS+ ou MMS.

Dans ce cas, le message envoyé peut être un message vide.

Alternativement, le message envoyé peut être un message dont le contenu n'est pas vide et préalablement généré et mémorisé. Un tel message peut par exemple être sélectionné parmi plusieurs messages préalablement mémorisés.

Suivant un exemple de réalisation, l'étape de détection d'un numéro cible dans le message peut comprendre une analyse du contenu du message.

Lorsque le message est un message écrit, de type SMS ou MMS, une telle analyse peut comprendre une analyse syntaxique du message en vue d'identifier une chaîne numérique, ou éventuellement alphanumérique, correspondant à un numéro de téléphone.

Lorsque le message est un message sonore, une telle analyse peut comprendre une analyse fréquentielle du signal composant ledit message pour détecter une chaîne numérique, ou éventuellement alphanumérique, correspondant à un numéro de téléphone.

En particulier, lorsque le message reçu est envoyé par un numéro solliciteur court, le numéro cible est généralement inscrit dans le corps du message. Dans ce cas, le corps du message peut être analysé pour détecter ce numéro cible.

De plus, dans le cas où le numéro émetteur du message reçu est un numéro d'appel standard, par opposition à un numéro court, le numéro d'appel standard peut correspondre à une carte SIM utilisée dans une SIMBOX, ou à une carte SIM utilisée pour solliciter une communication vers un numéro cible soumis à une tarification spécifique.

Lorsqu'un nouveau numéro d'appel est détecté lors de l'étape de détection, ce dernier est comparé à une liste de numéros cibles préalablement testés. S'il est déjà présent dans cette liste alors il n'est pas considéré comme étant un nouveau numéro cible. Dans le cas contraire, il est mémorisé comme nouveau numéro cible.

Suivant un mode de réalisation particulier nullement limitatif, le procédé selon l'invention peut comprendre au moins une itération de la phase de détection utilisant uniquement un, ou plusieurs, nouveau(x) numéro(s) cible(s) détecté(s) lors d'une itération antérieure de ladite phase de détection.

Dans ce cas, cette itération de la phase de détection, le ou les numéros cibles déjà testés lors d'itérations précédentes ne sont pas utilisés.

Suivant un exemple de réalisation non limitatif de ce mode de réalisation, chaque nouvelle itération de la phase de détection utilise uniquement un, ou plusieurs, nouveau(x) numéro(s) cible(s) détecté(s) lors d'une itération antérieure. Dans cet exemple de réalisation, chaque numéro cible n'est testé qu'une seule fois.

Ce mode de réalisation présente l'avantage de limiter les coûts de communication et le nombre de communications téléphoniques.

Suivant un autre mode de réalisation, le procédé selon l'invention peut comprendre au moins une itération de la phase de détection utilisant au moins un numéro cible préalablement utilisé dans une itération antérieure.

Dans ce cas, cette itération de la phase de détection, un ou des numéros cibles déjà testés dans le passé peuvent être testés à nouveau, en plus de nouveaux numéros cibles.

Ce mode de réalisation présente l'avantage de tester un numéro cible plusieurs fois et ainsi de réaliser une détection plus complète pouvant mener à la détection d'autres numéros solliciteurs et d'autre numéros cibles, qui lui sont associés.

Par « itération antérieure », on entend une itération réalisée précédemment et qui peut être, ou non, la dernière itération réalisée.

Le procédé selon l'invention peut en outre comprendre une étape de désactivation d'au moins une carte SIM associée à un numéro solliciteur.

Pour ce faire, le ou chaque numéro solliciteur détecté peut être communiqué à l'opérateur lorsque le numéro lui appartient selon le plan de numérotation international, ou l'opérateur auquel appartient la carte SIM. L'opérateur peut alors désactiver cette carte SIM, mettant ainsi fin à l'utilisation du numéro d'appel associé à ladite carte SIM.

Suivant un autre aspect de la même invention, il est proposé un système de détection de numéro de téléphone, dit numéro solliciteur, utilisé pour solliciter une communication téléphonique vers au moins un numéro de téléphone, dit numéro cible, ledit système mettant en œuvre le procédé selon l'invention et comprenant un serveur en communication avec des robots d'appel.

Le robot d'appel et le serveur peuvent être disposés sur un même site.

Alternativement, le serveur peut être distant d'au moins un robot d'appel. Dans ce cas, le serveur peut être en communication avec ledit robot d'appel distant au travers un réseau de communication, de type Internet.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple de réalisation non limitatif du procédé selon l'invention ; et
- la FIGURE 2 est une représentation schématique d'un exemple du système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

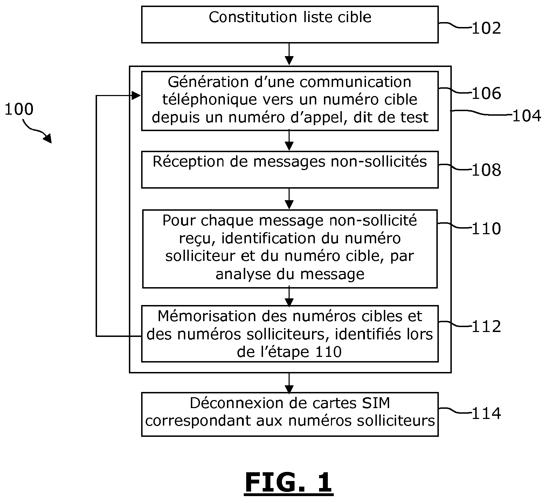

La FIGURE 1 est une représentation schématique d'un exemple de réalisation non limitatif du procédé de détection de contournements selon l'invention, dans un réseau de téléphonie donné.

Le procédé 100, représenté sur la FIGURE 1, comprend une étape préliminaire 102 lors de laquelle une liste, dite cible, comprenant au moins un numéro d'appel cible est constituée. Chaque numéro cible ajouté dans la liste cible est un numéro d'appel soumis à une tarification spécifique permettant aux fraudeurs un gain financier.

Par exemple, et de manière nullement limitative, un numéro cible peut être un numéro d'appel surtaxé, ou un numéro d'appel d'un autre réseau de téléphonie mobile.

Un numéro cible peut être identifié dans une liste de numéros d'appel surtaxés.

Un numéro cible peut être un numéro d'appel préalablement signalé par un utilisateur ayant été victime d'une facturation inattendue et élevée.

Un numéro cible peut être identifié en réalisant une campagne d'appels par un ou plusieurs robots vers des numéros aléatoires, et en analysant les coûts pour chaque appel.

Une fois la liste cible établie, le procédé 100 comprend au moins deux itérations d'une phase 104 de détection de numéros solliciteurs utilisés frauduleusement, par exemple dans des SIMBOX, pour solliciter des communications téléphoniques vers des numéros cibles, par le biais de messages non-sollicités qu'ils émettent vers des utilisateurs.

La phase de détection 104 comprend une étape 106, lors de laquelle un robot émet une communication téléphonique vers un numéro cible. Un numéro d'appel, dit numéro de test, est utilisé pour l'émission de cette communication test. La communication test peut être un message, de type SMS ou MMS, émis vers le numéro cible. Alternativement, la communication test peut être un appel téléphonique, décroché ou non, avec ou sans émission d'un signal sonore.

L'étape 106 peut être réalisée pour chaque numéro cible, avec le même numéro test ou avec des numéros test différents.

L'émission de communications test déclenche la réception, lors d'une étape 108, de messages non-sollicités invitant à réaliser une communication téléphonique, sous la forme d'un appel ou d'un message, vers un numéro cible indiqué dans ledit message.

Lors d'une étape 110, chaque message reçu est analysé pour :
- identifier un numéro d'appel solliciteur : ce numéro est le numéro utilisé pour émettre le message ; et
- identifier un numéro cible : ce numéro est inscrit dans le corps du message. Il s'agit du numéro vers lequel il est explicitement demandé d'émettre un appel ou d'envoyer un message. Ce numéro est généralement soumis à une tarification spécifique, tel un numéro de Service à Valeur Ajoutée surtaxé ou un numéro d'appel vers l'étranger par exemple.

Lorsque le message reçu est un message écrit, l'identification du numéro cible comprend une analyse textuelle du message pour identifier une chaine numérique, ou alphanumérique, correspondant à un numéro d'appel.

Lorsque le message reçu est un message sonore, l'identification du numéro cible comprend une analyse fréquentielle du message pour identifier une chaine numérique, ou alphanumérique, correspondant à un numéro d'appel.

Lors d'une étape 112, le numéro cible détecté dans le message non-sollicité reçu à l'étape 108, et identifié lors de l'étape 110, est mémorisé comme numéro cible pour une nouvelle itération de la phase de détection 104, en particulier lorsque le numéro cible est un nouveau numéro.

Cette étape 112 peut mémoriser chaque nouveau numéro cible détecté lors de l'étape 110 dans la liste cible constituée lors de l'étape préliminaire 102. Alternativement, cette étape 112 peut mémoriser chaque nouveau numéro cible détecté lors de l'étape 110 dans une nouvelle liste, qui sera utilisée comme liste cible lors d'une prochaine itération de la phase de détection 104.

L'étape 112 mémorise également le numéro solliciteur dans une liste, dite liste solliciteur, en particulier lorsque le numéro solliciteur détecté est un nouveau numéro.

La phase de détection 104 est réitérée au moins une nouvelle fois, soit avec la liste cible initiale mise à jour avec les nouveaux numéros cibles identifiés lors de l'étape 110, soit avec une nouvelle liste cible constituée lors de l'étape 112.

La phase de détection 104 peut être réitérée autant de fois que nécessaire/souhaitée, par exemple jusqu'à ce qu'aucun nouveau numéro cible soit détecté.

Le procédé 100 comprend, suite à la phase de détection 104, une étape 114 de déconnexion des cartes SIM associées à chaque numéro solliciteur détecté lors de l'étape 110 et mémorisé lors de l'étape 112.

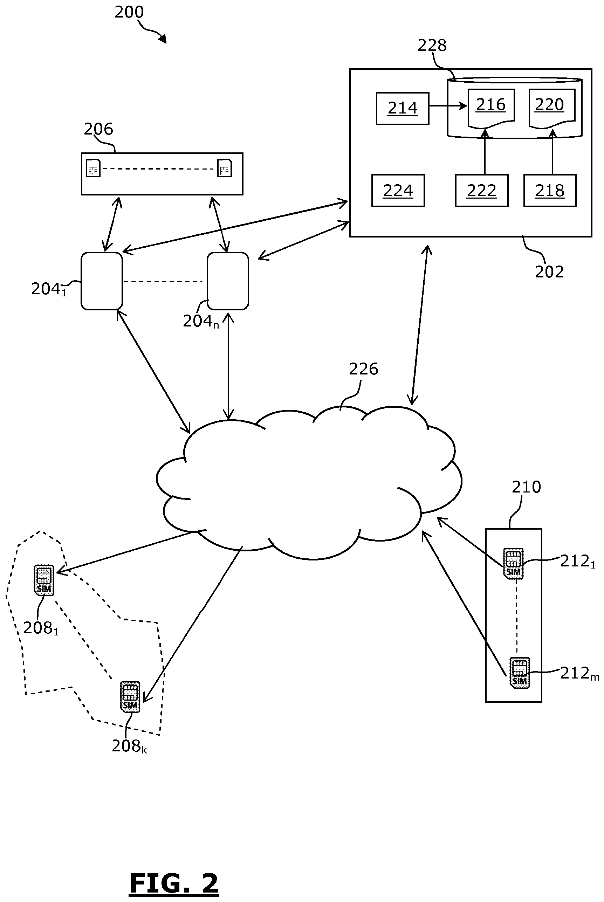

La FIGURE 2 est une représentation schématique d'un exemple de réalisation non limitatif d'un système selon l'invention.

Le système 200, représenté sur la FIGURE 2, comprend un serveur 202. Le serveur 202 est en communication avec des robots 204₁-204ₙ, localisés sur un même site, ou sur des sites différents distants les uns des autres. Le serveur 202 peut être en communication avec chacun des robots 204 au travers d'un réseau de communication de type Internet, par exemple via un VPN.

Les robots 204 sont en communication avec un serveur 206 de cartes SIM susceptible de se trouver sur un site distant des robots 204, ou sur le(s) même(s) site(s) que les robots 204. Le serveur de carte SIM 206 peut être en communication avec chacun des robots 204 au travers d'un réseau de communication de type Internet, par exemple via un VPN.

Les robots 204 sont agencés pour émettre des communications test, tels que des appels test ou des messages test, vers un ou plusieurs numéros cibles 208₁-208ₖ soumis à une tarification spécifique.

En retour, des messages non-sollicités sont émis vers les robots d'appels 204₁-204ₙ par un serveur de cartes SIM 210, également appelé SIMBOX, utilisant frauduleusement des numéros solliciteurs associés à des cartes SIM 212₁-212ₘ

Le serveur 202 comporte des modules logiciels et/ou matériels configurés pour réaliser la phase de constitution d'une liste de numéros cibles.

En particulier, le serveur 202 comprend un module 214 configuré pour consulter des annuaires de numéros surtaxés, un annuaire de numéros signalés comme frauduleux par les utilisateurs, etc. pour constituer une liste 216, dite liste cible, de numéros cibles.

Le serveur 202 comporte un module 218 d'analyse de chaque message reçu par les robots d'appel 204₁-204ₙ, pour détecter et mémoriser un numéro solliciteur, correspondant au numéro de téléphone ayant émis le message. Ce numéro solliciteur est mémorisé comme numéro solliciteur dans une liste 220, s'il s'agit d'un nouveau numéro qui n'est pas déjà inscrit dans cette liste 220. Ce numéro solliciteur correspond à un numéro de téléphone associé par exemple à une carte SIM 212_{¡} utilisée dans la SIMBOX 210.

Le serveur 202 comporte un module 222 d'analyse du contenu de chaque message reçu par les robots d'appel 204₁-204ₙ, pour détecter dans le corps dudit message et mémoriser un numéro cible, correspondant au numéro de téléphone vers lequel le message sollicite de réaliser une communication téléphonique. Ce numéro cible est mémorisé comme numéro cible dans la liste cible 216, s'il s'agit d'un nouveau numéro qui n'est pas déjà inscrit dans cette liste 216. Ce numéro cible correspond à un numéro de téléphone associé par exemple à une carte SIM 208ᵢ soumis à une tarification spécifique.

Le serveur 202 comporte en outre un module 224 contrôlant et commandant les robots d'appel 204 pour réaliser des appels test au travers d'un réseau de téléphonie mobile 226.

Le serveur 202 comprend aussi des moyens de mémorisation 228 pour mémoriser différentes données telles que les listes 216 et 220.

Bien entendu, l'invention n'est pas limitée aux exemples qui viennent d'être décrits. La portée de la protection est déterminée par les revendications annexées.

## Revendications

1. Procédé (100) de détection d'au moins un numéro de téléphone, dit numéro solliciteur, utilisé pour solliciter une communication téléphonique vers au moins un numéro de téléphone, dit numéro cible, ledit procédé (100) comprenant une phase (104), dite de détection, comprenant les étapes suivantes :
- émission (106), par au moins un robot (204) utilisant au moins un numéro de téléphone, dit numéro test, d'une communication téléphonique vers au moins un numéro cible préalablement détecté ;
- réception (108) d'au moins un message audit numéro test ; et
- pour au moins un message reçu :
▪ détection (110) d'un numéro de téléphone contenu dans ledit message téléphonique, et mémorisation (112) dudit numéro comme numéro cible lorsque ledit numéro est un nouveau numéro ; et
▪ mémorisation (112) du numéro de téléphone émetteur dudit message comme numéro solliciteur, lorsque ledit numéro est un nouveau numéro ;
ledit procédé (100) comprenant au moins une nouvelle itération de ladite phase de détection (104) utilisant au moins un nouveau numéro cible détecté lors de ladite étape de détection.

2. Procédé (100) selon la revendication précédente, **caractérisé en ce qu'**il comprend en outre une étape (102) préliminaire de constitution d'une liste (216), dite cible, comprenant au moins un numéro cible.

3. Procédé (100) selon la revendication précédente, **caractérisé en ce que** l'étape (102) préliminaire de constitution d'une liste cible (216) comprend une lecture d'au moins un numéro d'appel dans une liste de numéros surtaxés.

4. Procédé (100) selon l'une quelconque des revendications précédentes, **caractérisé en ce que**, pour au moins un numéro cible, l'étape (106) d'émission d'au moins une communication téléphonique comprend une émission d'un appel téléphonique.

5. Procédé (100) selon l'une quelconque des revendications précédentes, **caractérisé en ce que**, pour au moins un numéro cible, l'étape (106) d'émission d'au moins une communication téléphonique comprend une émission d'un message de type SMS, SMS+ ou MMS.

6. Procédé (100) selon l'une quelconque des revendications précédentes, **caractérisé en ce que**, lorsque le message reçu est un message écrit, l'étape de détection (110) comprend une analyse syntaxique dudit message en vue d'identifier une chaine numérique, ou éventuellement alphanumérique, correspondant à un numéro de téléphone.

7. Procédé (100) selon l'une quelconque des revendications précédentes, **caractérisé en ce que**, lorsque le message reçu est un message sonore, l'étape de détection (110) comprend une analyse fréquentielle du signal composant ledit message en vue d'identifier une chaine numérique, ou éventuellement alphanumérique, correspondant à un numéro de téléphone.

8. Procédé (100) selon l'une quelconque des revendications précédentes, **caractérisé en ce qu'**il comprend une itération de la phase de détection (104) utilisant uniquement un, ou plusieurs, nouveau(x) numéro(s) cible(s) détecté(s) lors d'une itération précédente de ladite phase de détection (104).

9. Procédé (100) selon l'une quelconque des revendications précédentes, **caractérisé en ce qu'**il comprend une itération de la phase de détection (104) utilisant au moins un numéro cible préalablement utilisé dans une itération précédente.

10. Procédé (100) selon l'une quelconque des revendications précédentes, **caractérisé en ce qu'**il comprend une étape (114) de désactivation d'au moins une carte SIM (212₁-212ₘ) associé à un numéro solliciteur.

11. Système (200) de détection de numéro de téléphone, dit numéro solliciteur, utilisé pour solliciter une communication téléphonique vers au moins un numéro de téléphone, dit numéro cible, ledit système mettant en œuvre le procédé (100) selon l'une quelconque des revendications précédentes et comprenant un serveur (202) en communication avec des robots (204₁-204ₙ) d'appel.

12. Système (200) selon la revendication précédente, **caractérisé en ce que** le serveur (202) est situé à distance d'un ou plusieurs robots d'appel (204₁-204ₙ).

## Patentansprüche

1. Verfahren (100) zur Erfassung mindestens einer Telefonnummer, Anforderernummer genannt, die verwendet wird, um eine Telefonkommunikation an mindestens eine Telefonnummer, Zielnummer genannt, anzufordern, wobei das Verfahren (100) eine so genannte Erfassungsphase (104) umfasst, die die folgenden Schritte umfasst:
- Senden (106) durch mindestens einen Roboter (204), der mindestens eine Telefonnummer, Testnummer genannt, verwendet, einer Telefonkommunikation an mindestens eine vorher erfasste Zielnummer;
- Empfang (108) mindestens einer Nachricht unter der Testnummer; und
- für mindestens eine empfangene Nachricht:
▪ Erfassung (110) einer Telefonnummer, die in der Telefonnachricht enthalten ist, und Speicherung (112) der Nummer als Zielnummer, wenn die Nummer eine neue Nummer ist; und
▪ Speicherung (112) der die Nachricht sendenden Telefonnummer als Anforderernummer, wenn die Nummer eine neue Nummer ist;
wobei das Verfahren (100) mindestens eine neue Iteration der Erfassungsphase (104) umfasst, die mindestens eine neue Zielnummer verwendet, die während des Erfassungsschritts erfasst wurde.

2. Verfahren (100) nach dem vorhergehenden Anspruch, **dadurch gekennzeichnet, dass** es ferner einen vorherigen Schritt (102) der Erstellung einer so genannten Zielliste (216), umfassend mindestens eine Zielnummer, umfasst.

3. Verfahren (100) nach dem vorhergehenden Anspruch, **dadurch gekennzeichnet, dass** der vorherige Schritt (102) der Erstellung einer Zielliste (216) ein Ablesen mindestens einer Rufnummer aus einer Liste von kostenpflichtigen Nummern umfasst.

4. Verfahren (100) nach einem der vorhergehenden Ansprüche, **dadurch gekennzeichnet, dass** für mindestens eine Zielnummer der Schritt (106) des Sendens mindestens einer Telefonkommunikation ein Senden eines Telefonanrufs umfasst.

5. Verfahren (100) nach einem der vorhergehenden Ansprüche, **dadurch gekennzeichnet, dass** für mindestens eine Zielnummer der Schritt (106) des Sendens mindestens einer Telefonkommunikation ein Senden einer Nachricht des Typs SMS, SMS+ oder MMS umfasst.

6. Verfahren (100) nach einem der vorhergehenden Ansprüche, **dadurch gekennzeichnet, dass**, wenn die empfangene Nachricht eine schriftliche Nachricht ist, der Erfassungsschritt (110) eine syntaktische Analyse der Nachricht umfasst, um eine digitale oder eventuell alphanumerische Kette entsprechend einer Telefonnummer zu identifizieren.

7. Verfahren (100) nach einem der vorhergehenden Ansprüche, **dadurch gekennzeichnet, dass**, wenn die empfangene Nachricht eine Sprachnachricht ist, der Erfassungsschritt (110) eine Frequenzanalyse des Signals, aus dem sich die Nachricht zusammensetzt, umfasst, um eine digitale oder eventuell alphanumerische Kette entsprechend einer Telefonnummer zu identifizieren.

8. Verfahren (100) nach einem der vorhergehenden Ansprüche, **dadurch gekennzeichnet, dass** es eine Iteration der Erfassungsphase (104) umfasst, die nur eine oder mehrere neue Zielnummer(n) verwendet, die bei einer vorhergehenden Iteration der Erfassungsphase (104) erfasst wurde(n).

9. Verfahren (100) nach einem der vorhergehenden Ansprüche, **dadurch gekennzeichnet, dass** es eine Iteration der Erfassungsphase (104) umfasst, die mindestens eine Zielnummer verwendet, die vorher bei einer vorhergehenden Iteration verwendet wurde.

10. Verfahren (100) nach einem der vorhergehenden Ansprüche, **dadurch gekennzeichnet, dass** es einen Schritt (114) der Deaktivierung mindestens einer SIM-Karte (212₁ - 212ₘ), die der Anforderernummer zugeordnet ist, umfasst.

11. System (200) zur Erfassung einer Telefonnummer, Anforderernummer genannt, die verwendet wird, um eine Telefonkommunikation an mindestens eine Telefonnummer, Zielnummer genannt, anzufordern, wobei das System (200) implementiert das Verfahren (100) nach einem der vorhergehenden Ansprüche und umfasst
- einen Server (202) in Kommunikation mit Anrufrobotern (204₁ - 204ₙ).

12. System (200) nach dem vorhergehenden Anspruch, **dadurch gekennzeichnet, dass** der Server (202) in einer Entfernung zu einem oder mehreren Rufrobotern (2041 - 204n) angeordnet ist.

## Claims

1. A method (100) of detecting at least one telephone number referred to as a "soliciting" number, that is being used for soliciting telephone calls to at least one telephone number, referred to as a "target" number, said method (100) comprising a "detection" stage (104) comprising the following steps:
- sending (106) a telephone call by means of at least one robot (204) using at least one "test" telephone number, the telephone call being sent to at least one previously-detected target number;
- receiving (108) at least one message at said test number; and
- for at least one received message:
▪ detecting (110) a telephone number contained in said telephone message and storing (112) said number as a target number when said number is a new number; and
▪ storing (112) the telephone number that sent said message as a soliciting number when said number is a new number;
said method (100) including at least one new iteration of said detection stage (104) using at least one new target number detected during said detection step.

2. A method (100) according to the preceding claim, **characterized in that** it further comprises a preliminary step (102) of preparing a "target" list (216) comprising at least one target number.

3. A method (100) according to the preceding claim, **characterized in that** the preliminary step (102) of preparing a target list (216) comprises reading at least one telephone number in a list of premium rate numbers.

4. A method (100) according to any preceding claim, **characterized in that**, for at least one target number, the step (106) of sending at least one telephone call comprises sending a voice call.

5. A method (100) according to any preceding claim, **characterized in that**, for at least one target number, the step (106) of sending at least one telephone call comprises sending a message of SMS, SMS+, or MMS type.

6. A method (100) according to any preceding claim, **characterized in that**, when the received message is a written message, the detection step (110) comprises analyzing to syntax of said message in order to identify a numerical or possibly an alphanumerical string corresponding to a telephone number.

7. A method (100) according to any preceding claim, **characterized in that** when the received message is a sound message, the detection step (110) comprises frequency analysis of the signal constituting said message in order to identify a numerical or possibly an alphanumerical string corresponding to a telephone number.

8. A method (100) according to any preceding claim, **characterized in that** it includes an iteration of the detection stage (104) making use solely of one or more new target numbers detected during an earlier iteration of said detection stage (104).

9. A method (100) according to any preceding claim, **characterized in that** it includes an iteration of the detection stage (104) using at least one target number that has previously been used in a preceding iteration.

10. A method (100) according to any preceding claim, **characterized in that** it includes a step (114) of deactivating at least one SIM card (212₁-212ₘ) associated with a soliciting number.

11. A system (200) for detecting a telephone number, referred to as a "soliciting" number, that is being used for soliciting a telephone call to at least one telephone number, referred to as a "target" number, said system (200) performing the method (100) according to any preceding claim and comprising a server (202) in communication with call robots (204₁-204ₙ).

12. A system (200) according to the preceding claim, **characterized in that** the server (202) is situated remotely from one or more call robots (204₁-204ₙ).
